# FASCICULE DE BREVET EUROPEEN

(11) **EP 2 211 300 B1**
(45) Date de publication et mention de la délivrance du brevet: **23.11.2016**
(21) Numéro de dépôt: 10150771.3
(22) Date de dépôt: 14.01.2010
(51) Int. Cl.: G06Q 10/04, G06Q 50/06

(54) **Procédé de prévision de la production électrique d'un dispositif photovoltaïque**
Prognoseverfahren der Stromproduktion einer Photovoltaik-Anlage
Method of forecasting electricity production of photovoltaic means

(30) Priorité: 19.01.2009 FR 0900223
(43) Date de publication de la demande: 28.07.2010
(73) Titulaire: Commissariat à l'Énergie Atomique et aux Énergies Alternatives, 75015 Paris (FR)
(72) Inventeur: Le Pivert, Xavier, 73100 Tresserve (FR)
(74) Mandataire: Novaimo

(56) Documents cités:
- WO-A-2005/019870
- STEVE RANSOME: "HOW WELL DO PV MODELLING ALGORITHMS REALLY PREDICT PERFORMANCE" INTERNET CITATION, [Online] 1 janvier 2007 (2007-01-01), pages 1-10, XP007909149 Extrait de l'Internet: URL:http://www.steveransome.com/PUBS/2007M ilan_4EP_1_1_paper.pdf> [extrait le 2009-07-09]
- DREWS ET AL: "Monitoring and remote failure detection of grid-connected PV systems based on satellite observations" SOLAR ENERGY, PERGAMON PRESS. OXFORD, GB, vol. 81, no. 4, 24 mars 2007 (2007-03-24), pages 548-564, XP022000706 ISSN: 0038-092X
- STEFAN BOFINGER ET AL: "SOLAR ELECTRICITY FORECAST APPROACHES AND FIRST RESULTS" 21ST SYMPOSIUM PHOTOVOLTAISCHE SOLARENERGIE,, [Online] 8 mars 2006 (2006-03-08), pages 1-5, XP007909161 Extrait de l'Internet: URL:http://www.envisolar.com/factsheets/me teocontrol_bofinger_dresden.pdf> [extrait le 2009-07-10]
- JORGE CASA NOVA ET AL: "Solar Irradiation Forecast Model Using Time Series Analysis and Sky Images" 2005 EFITA/WCCA JOINT CONGRESS ON IT IN AGRICULTURE,, 25 juillet 2005 (2005-07-25) , pages 1408-1415, XP007909162
- RICHARD PEREZ ET AL: 'A NEW SIMPLIFIED VERSION OF THE PEREZ DIFFUSE IRRADIANCE MODEL FOR TILTED SURFACES' SOLAR ENERGY, [en ligne] vol. 39, no. 3, 01 Janvier 1987, pages 221 - 231, XP055027209 ISBN: 00384392X/87 Extrait de l'Internet: <URL:http://www.physics.arizona.edu/~cronin /Solar/References/Shade effects/sdarticle (24).pdf> [extrait le 2012-05-15]
- ERBS D G ET AL: "Estimation of the diffuse radiation fraction for hourly, daily and monthly-average global radiation", SOLAR ENERGY, PERGAMON PRESS. OXFORD, GB, vol. 28, no. 4, 1 January 1982 (1982-01-01), pages 293-302, XP025416119, ISSN: 0038-092X, DOI: 10.1016/0038-092X(82)90302-4 [retrieved on 1982-01-01]

## Description

L'invention concerne un procédé de prévision de la production électrique d'un dispositif photovoltaïque. Elle concerne aussi un logiciel de mise en oeuvre d'un tel procédé ainsi qu'un dispositif photovoltaïque mettant en oeuvre un tel procédé. Enfin, elle concerne une utilisation de ce procédé pour le diagnostic d'un dispositif photovoltaïque.

La part de production d'énergie électrique provenant des installations photovoltaïques augmente rapidement. Une particularité de cette production solaire provient du fait qu'elle est très irrégulière puisqu'elle varie fortement en fonction des conditions météorologiques. Or lorsque ces installations sont connectées à un réseau électrique, ce caractère imprévisible induit une difficulté de gestion du réseau entier, puisqu'il devient difficile de garantir un équilibre entre la production et la demande en énergie. Plus généralement, ce caractère imprévisible de la production électrique est pénalisant pour tout dispositif dont la source d'énergie repose au moins en partie sur l'énergie solaire.

Pour pallier à cet inconvénient, il existe des modèles de prévision de la production électrique des installations photovoltaïques, à partir des prévisions météorologiques. Une telle solution est par exemple explicitée dans le document EP1660917. Toutefois, la production électrique d'une installation photovoltaïque dépend de nombreux paramètres et il est difficile de mettre au point un modèle très précis. En effet, il est nécessaire d'exploiter les prévisions météorologiques pour en déduire des prévisions très localisées, jusqu'à obtenir une prévision de l'éclairement dans le plan des modules photovoltaïques, pour finalement estimer la production électrique de l'installation sur la base d'un rendement prédéfini. Lors de toutes ces étapes, il existe de nombreuses erreurs et approximations. Les modèles existants donnent finalement des résultats imprécis et insatisfaisants.

Le document "HOW WELL DO PV MODELLING ALGORITHMS REALLY PREDICT PERFORMANCE" de Steve Ransome décrit la modélisation de la production de panneaux photovoltaïques en fonction du temps (nuageux ou couvert), mais il n'enseigne pas de correction du modèle de prévision en fonction de ce paramètre.

Ainsi, un objet général de l'invention est de proposer une solution plus précise et fiable de prévision de la production électrique d'un dispositif photovoltaïque.

A cet effet, l'invention repose un procédé de prévision de la production électrique d'un dispositif photovoltaïque comprenant des modules photovoltaïques, comprenant une première partie d'estimation de l'éclairement qui sera reçu dans le plan des modules photovoltaïques et une seconde partie d'estimation de la production électrique du dispositif photovoltaïque, caractérisé en ce qu'il comprend la première étape suivante :
- détermination si une période passée considérée est ensoleillée ou nuageuse,
   et caractérisé en ce qu'il comprend la seconde étape suivante de mise en oeuvre d'au moins une des deux étapes suivantes :
   - correction de la seconde partie du procédé de prévision de la production électrique à partir de la mesure de la production électrique réelle des modules photovoltaïques sur la période considérée si cette période considérée est ensoleillée ; et/ou
   - correction de la première partie du procédé de prévision de la production électrique à partir de la mesure de la production électrique réelle des modules photovoltaïques sur la période considérée si cette période considérée est nuageuse.

L'invention porte aussi sur un support informatique comprenant un logiciel apte à mettre en oeuvre le procédé de prévision de la production électrique d'un dispositif photovoltaïque tel que décrit précédemment.

L'invention porte aussi sur un dispositif photovoltaïque comprenant des modules photovoltaïques, un élément de mesure de leur production électrique réelle, caractérisé en ce qu'il comprend une unité de gestion mettant en oeuvre le procédé de prévision de la production électrique tel que décrit précédemment.

L'invention porte aussi sur l'utilisation du procédé de prévision de la production électrique d'un dispositif photovoltaïque tel que décrit précédemment pour diagnostiquer l'état d'un dispositif photovoltaïque.

L'invention est plus précisément définie par les revendications.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 illustre schématiquement un dispositif photovoltaïque selon un mode d'exécution de l'invention.
La figure 2 illustre schématiquement les différents blocs du procédé de prévision de la production photovoltaïque selon le mode d'exécution de l'invention.
La figure 3 représente les puissances électriques mesurée et prévue sur une journée selon un premier scénario de mise en oeuvre du mode d'exécution de l'invention.
La figure 4 représente le rapport entre la puissance électrique mesurée et la puissance électrique théorique par temps clair en fonction du temps selon le premier scénario de mise en oeuvre du mode d'exécution de l'invention.
La figure 5 représente la valeur absolue de la dérivée du rapport entre la puissance électrique mesurée et la puissance électrique théorique par temps clair en fonction du temps selon le premier scénario de mise en oeuvre du mode d'exécution de l'invention.
La figure 6 représente les puissances électriques mesurée et théorique par temps clair sur une journée selon un second scénario de mise en oeuvre du mode d'exécution de l'invention.
La figure 7 représente le rapport entre la puissance électrique mesurée et la puissance électrique théorique par temps clair en fonction du temps selon le second scénario de mise en oeuvre du mode d'exécution de l'invention.
La figure 8 représente la valeur absolue de la dérivée du rapport entre la puissance électrique mesurée et la puissance électrique théorique par temps clair en fonction du temps selon le second scénario de mise en oeuvre du mode d'exécution de l'invention.
La figure 9 illustre l'éclairement en fonction du temps selon un autre scénario de mise en oeuvre du mode d'exécution de l'invention.
La figure 10 illustre la température en fonction du temps selon cet autre scénario de mise en oeuvre du mode d'exécution de l'invention.
La figure 11 illustre les productions mesurée et prévue en fonction du temps selon ce scénario de mise en oeuvre du mode d'exécution de l'invention.
La figure 12 représente les pertes de la production photovoltaïque en fonction du rapport de la puissance prévue sur la puissance nominale selon le scénario de mise en oeuvre du mode d'exécution de l'invention.
La figure 13 illustre les productions mesurée et prévue après correction en fonction du temps selon le scénario de mise en oeuvre du mode d'exécution de l'invention.
La figure 14 illustre la production électrique mesurée durant un dernier scénario de journée nuageuse de mise en oeuvre du mode d'exécution de l'invention.
La figure 15 représente les éclairements calculés dans le plan des modules photovoltaïques et dans le plan horizontal selon ce scénario nuageux.
La figure 16 illustre des éclairements issus des prévisions météorologiques et des éclairements calculés par le procédé du mode d'exécution de l'invention.
La figure 17 illustre l'évolution des poids en fonction de l'irradiation prévue apportés à différentes prévisions météorologiques selon le mode d'exécution de l'invention.

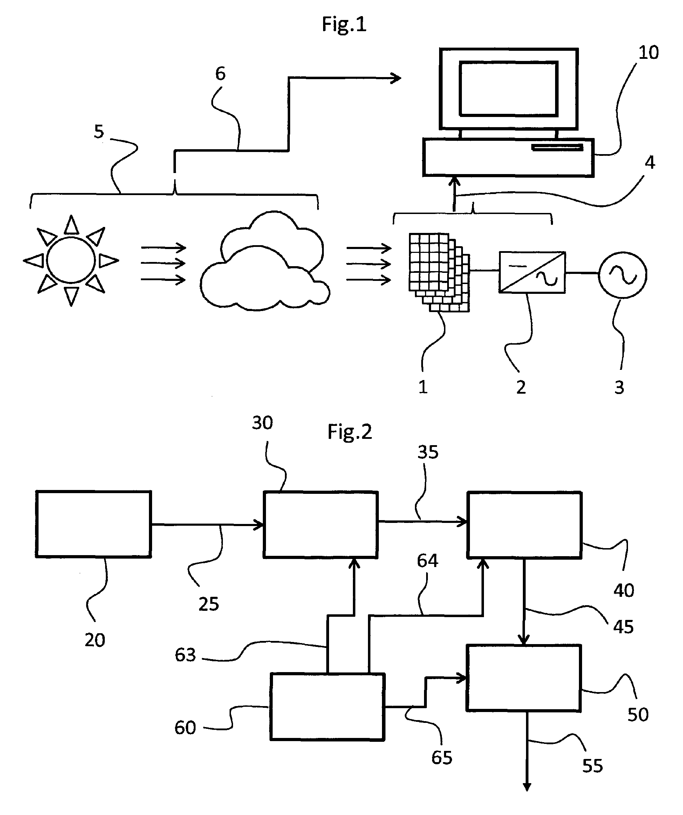

La figure 1 représente schématiquement un dispositif photovoltaïque selon un mode d'exécution de l'invention. Ce dispositif comprend plusieurs modules photovoltaïques 1 reliés au réseau électrique traditionnel 3 par l'intermédiaire d'un onduleur 2. Les modules peuvent bien entendu être reliés à une application autonome par l'intermédiaire d'un convertisseur. Ce dispositif comprend de plus une unité de contrôle ou de gestion 10 reposant sur un calculateur comprenant un logiciel qui met en oeuvre le procédé de prévision de la production électrique qui sera décrit ci-après. L'unité de contrôle 10 reçoit la mesure de la production électrique réelle de l'installation photovoltaïque 1,2 par une liaison 4. D'autre part, cette unité de contrôle 10 reçoit en entrée par un moyen de communication 6 les données de prévisions météorologiques établies par une entité de prévisions météorologiques 5.

L'unité de contrôle 10 met donc en oeuvre un procédé de prévision de la production électrique du dispositif photovoltaïque, qui repose sur différents blocs représentés en figure 2. Cette unité de contrôle peut se trouver située sur le site du dispositif photovoltaïque ou éloignée de ce site. Elle peut consister en des moyens de calcul logiciels et/ou matériels (software et/ou hardware), un ou plusieurs moyen(s) de mémorisation pour stocker les informations à traiter et des moyens de communication.

Le bloc 20 met en oeuvre des prévisions météorologiques. Cette partie préalable est réalisée par une entité météorologique 5 extérieure au dispositif de production photovoltaïque, selon toutes méthodes : l'invention ne porte pas spécifiquement sur ce bloc. Les résultats 25 obtenus par ce bloc 20 sont transmis par le moyen de communication 6 à l'unité de contrôle 10 du dispositif photovoltaïque. Ces données 25, qui comprennent particulièrement l'irradiation ou l'éclairement et la température ambiante, représentent les entrées essentielles du procédé d'estimation de la production électrique qui va être mis en oeuvre par l'unité de gestion 10, et qui repose sur quatre blocs 30, 40, 50, 60 qui vont maintenant être décrits.

Le premier bloc 30 met en oeuvre le calcul de prévisions météorologiques locales plus affinées que celles transmises par l'entité météorologique 5. Pour cela, il utilise des méthodes d'interpolation et/ou de corrélations statistiques et/ou des bases de données d'historiques de prévision et de mesures par des stations météorologiques, afin d'obtenir comme résultat 35 des grandeurs de prévisions météorologiques, comme l'éclairement dans un plan horizontal et la température, avec un pas spatial et temporel plus fin que celui des données météorologiques 25 reçues depuis le bloc 20. En effet, ces prévisions 25 transmises par le bloc 20 le sont en général selon un maillage de plusieurs kilomètres et un pas temporel de plusieurs heures, ce qui est insuffisant à l'échelle d'un site de production photovoltaïque. Les calculs mis en oeuvre dans ce premier bloc 30 reposent donc sur un premier modèle de calcul.

Ensuite, ces résultats 35 de prévisions météorologiques locales sont exploités par un second bloc 40 qui va calculer l'éclairement prévisionnel dans le plan des modules photovoltaïques, à l'aide d'un second modèle de calcul.

Les résultats 45 obtenus par le second bloc 40 sont ensuite utilisés par un troisième bloc 50 qui calcule finalement une estimation de la production électrique 55 du dispositif photovoltaïque en fonction de ses performances, qui sont modélisées par un coefficient de pertes, ou par un rendement, qui peut être fonction de la température et de l'éclairage.

Tous les blocs précédents reposent initialement sur des approches théoriques et/ou empiriques diverses, pouvant appartenir à l'état de la technique. Les résultats 35, 45, 55 obtenus à chaque étape présentent une certaine erreur et incertitude. Selon un élément essentiel de l'invention, au moins un des trois modèles, préférentiellement les trois, mis en oeuvre par respectivement les blocs 30, 40, 50 est amélioré à partir de la comparaison directe ou indirecte entre la mesure de la production électrique réelle et la valeur de la production estimée sur une période donnée, et en fonction de la situation ensoleillée ou non de cette même période.

Pour cela, un dernier bloc 60 du procédé d'estimation de la production électrique transmet des données 63, 64, 65 aux blocs 30, 40 et 50 pour améliorer les modèles mis en oeuvre dans ces blocs selon un mécanisme empirique d'apprentissage. Selon le principe de l'invention, cet apprentissage dépend de deux étapes essentielles :
E1 - la détermination si la journée considérée est ensoleillée ou non ;
E2 - la correction d'une partie du procédé d'estimation de la production électrique, cette partie étant déterminée en fonction du résultat de l'étape E1, la correction reposant sur la comparaison entre la mesure directe ou indirecte d'une grandeur, cette grandeur étant directement mesurée s'il s'agit de la production électrique ou indirectement déduite de cette production électrique mesurée dans les autres cas, et l'estimation de cette même grandeur obtenue par le procédé mis en oeuvre dans l'unité de gestion 10 du dispositif.

Le bloc 60 met donc en oeuvre une première étape E1 essentielle de l'invention qui consiste à déterminer si une journée passée considérée est ensoleillée ou non. Le concept de l'invention consiste à considérer que si la journée est ensoleillée, les résultats obtenus par les blocs 30 et 40 du procédé de l'invention sont corrects, c'est-à-dire que l'éclairement estimé dans le plan des modules photovoltaïques est juste. L'erreur constatée sur la valeur de la prévision de la production électrique par le procédé, par sa comparaison avec la valeur réelle telle que mesurée, est alors uniquement causée par l'imprécision du troisième modèle de calcul mis en oeuvre au niveau du troisième bloc 50. Cette approche revient à considérer que par temps ensoleillé, l'erreur commise par les deux premiers blocs 30, 40 est négligeable par rapport à celle commise par le troisième bloc 50. Au contraire, si la journée n'est pas ensoleillée, nous la qualifierons simplement de « nuageuse » pour des raisons de simplification de la description, l'erreur finale constatée entre la prévision de la production électrique et la mesure réelle de cette production est attribuée aux deux premiers blocs 20, 30 ou à l'un d'entre eux, l'erreur engendrée par le troisième bloc 50 étant alors considérée comme négligeable.

Ce concept d'apprentissage présente l'avantage de permettre l'amélioration empirique des modèles de calcul mis en oeuvre par le procédé à partir de la seule mesure de la production réelle obtenue pour le dispositif photovoltaïque. Il ne nécessite pas plusieurs mesures différentes pour le traitement séparé des divers blocs du procédé, et par exemple ne nécessite pas de capteur d'ensoleillement comme un pyranomètre, qui est relativement coûteux.

La première étape E1 de détermination du type de journée, ensoleillée ou nuageuse, va maintenant être décrite. Le principe de cette détermination repose sur la comparaison entre d'une part la production d'électricité mesurée, reposant sur une série de mesures E11 par exemple avec une périodicité comprise entre 1 seconde et 10 minutes, et la même série obtenue pour la production d'électricité théorique par temps clair, en faisant l'hypothèse de temps clair, de préférence selon une fréquence en phase avec la série de mesures. Pour obtenir cette série de valeurs de production électrique théorique par temps clair, une première sous-étape consiste à déterminer la série de prévision de l'éclairement E12 dans le plan des modules photovoltaïques par temps clair par tout modèle existant, par exemple avec celui mis en oeuvre dans l'unité de gestion 10. Cette série peut aussi être corrigée à partir de prévisions météorologiques. D'autre part, une série de températures ambiantes est établie E13, soit par mesure, soit par calcul à l'aide de modèles, soit à partir des prévisions météorologiques. Enfin, la production photovoltaïque par temps clair E14 est alors calculée avec le bloc 50 du procédé de l'unité de gestion 10 du dispositif photovoltaïque, à partir de ces séries de valeurs d'éclairement et de température, en tenant compte des pertes ou performances au niveau des modules photovoltaïques telles qu'évaluées par le modèle mis en oeuvre au niveau de l'unité de gestion 10.

Lorsque les deux séries à comparer sont obtenues, il reste finalement à déterminer si la journée doit être considérée comme ensoleillée ou nuageuse. Cette qualification est mise en oeuvre par la détection d'éventuels passages nuageux, ce qui est aisément détectable puisque l'éclairement, et par conséquent la production électrique, baisse alors d'environ 80%. La journée ne sera pas considérée comme nuageuse s'il n'y a qu'un seul court passage nuageux. Un seuil prédéfini permet de fixer une limite entre une journée qui sera considérée comme une journée ensoleillée et une journée nuageuse. Cette dernière étape de qualification est compliquée par le fait qu'une zone d'ombre sur les modules photovoltaïques peut être provoquée par l'environnement du dispositif photovoltaïque, comme un bâtiment faisant de l'ombre à une certaine heure, et non par un passage nuageux. Le procédé fait donc la distinction entre le passage d'un nuage et un tel ombrage. Pour cela, le procédé de définition du type de journée repose non seulement sur l'analyse du rapport entre la puissance électrique mesurée et la puissance électrique théorique par temps clair E15, mais aussi sur l'analyse de la dérivée de ce rapport E16, pour tenir compte de la vitesse de variation de ce rapport. Deux séries temporelles sont donc obtenues, à partir desquelles on détecte des événements anomaux, définis par un certain seuil prédéfini. Dès que la quantité d'événements anormaux dépasse un certain seuil E17, la journée est considérée comme non ensoleillée, et sinon elle est ensoleillée.

En résumé, la première étape E1 de détermination du type de journée, ensoleillée ou nuageuse, comprend les sous-étapes suivantes :
E11 - Mesure selon une fréquence prédéfinie de la production d'électricité réelle ;
E14 - Détermination de la production d'électricité théorique par temps clair à partir d'une estimation de l'éclairement dans le plan des modules photovoltaïques par temps clair E12 et à partir de l'établissement d'une série de températures ambiantes E13 ;
E15 - analyse du rapport entre la puissance électrique mesurée et la puissance électrique théorique avec l'hypothèse de temps clair, en détectant d'éventuels événements anormaux ;
E16 - analyse de la dérivée de ce rapport, en détectant d'éventuels événements anormaux ;
E17 - détermination du type de journée, en comparant la quantité d'événements anormaux détectés par rapport à un seuil prédéfini.

En variante, le procédé précédent peut être simplifié en ne mettant en oeuvre qu'une seule des deux étapes d'analyse E15, E16. De plus, le procédé pourrait comprendre une étape préalable de détection des masques, c'est-à-dire des obstacles naturels comme les montagnes, les bâtiments,..., qui créent des ombrages au niveau des modules photovoltaïques, au moins à certaines périodes de l'année.

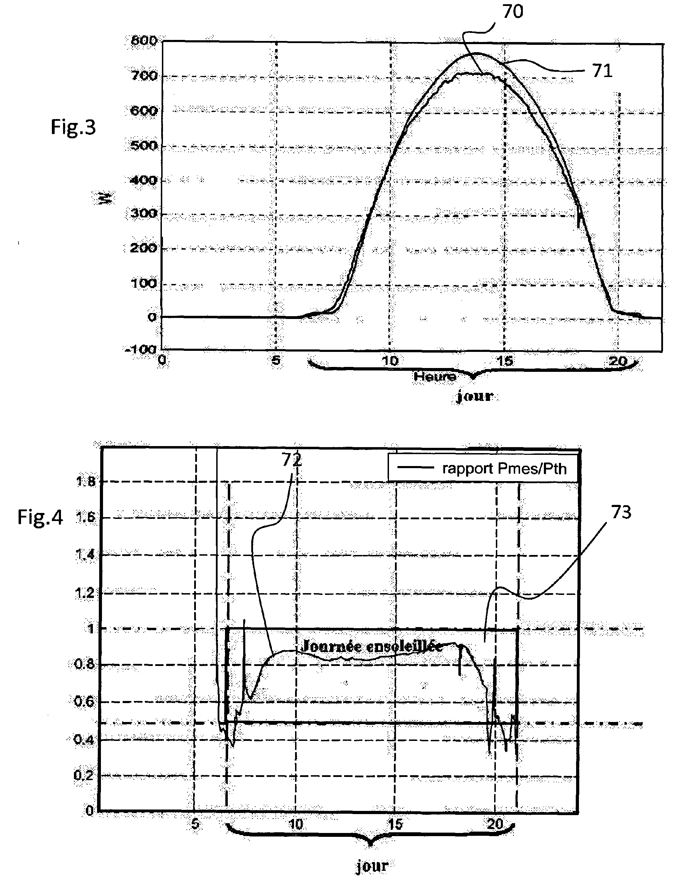

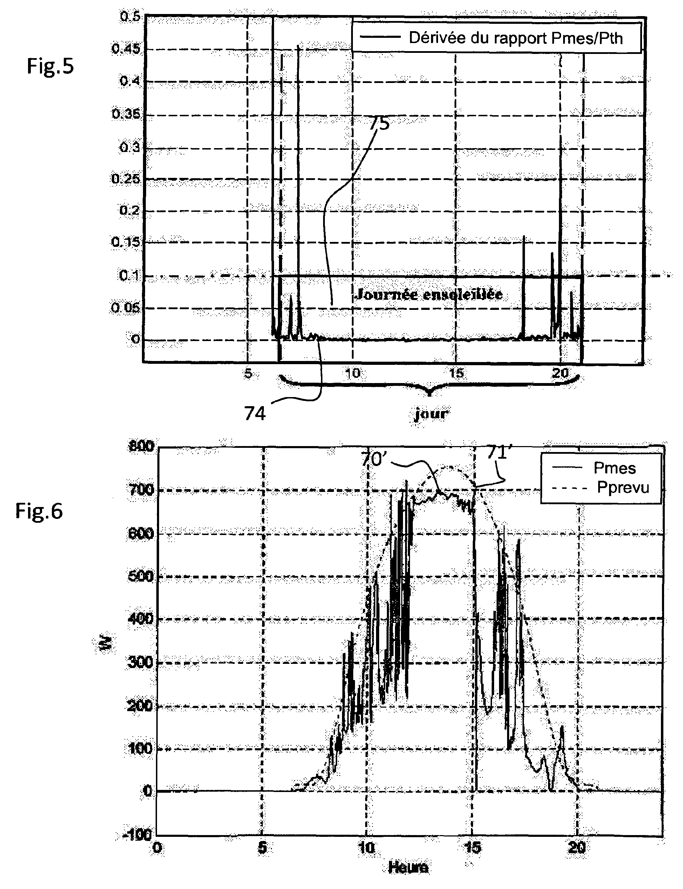

Les figures 3 à 5 illustrent un premier exemple de mise en oeuvre de l'étape E1 décrite précédemment. La figure 3 représente deux courbes 70, 71 correspondant respectivement aux puissances électriques mesurée et théorique par temps clair sur une journée selon un premier scénario. La figure 4 représente le rapport 72 entre la puissance électrique mesurée sur la puissance électrique théorique par temps clair en fonction du temps pour ce scénario. Sur cette figure, une zone rectangulaire 73 correspond à un seuil au delà duquel l'événement est considéré anormal. Lorsque la courbe 72 reste dans ce domaine 73, la situation correspond à une situation ensoleillée. Selon ce mode d'exécution, le domaine 73 dit de « journée ensoleillée » est défini pour une valeur du rapport de puissance 72 comprise entre 0,5 et 1. Enfin, la figure 5 illustre la courbe 74 de la valeur absolue de la dérivée du rapport de puissance en fonction du temps. De même, une zone rectangulaire 75 définie par une valeur de ce rapport comprise entre 0 et 0,1 correspond à une situation de journée ensoleillée. Finalement, il ressort que les deux courbes 72, 74 du rapport de puissance mesurée sur la puissance théorique par temps clair et de la valeur absolue de sa dérivée sortent très rarement des zones ensoleillées 73, 75. La journée considérée par ce scénario est donc considérée comme une journée ensoleillée.

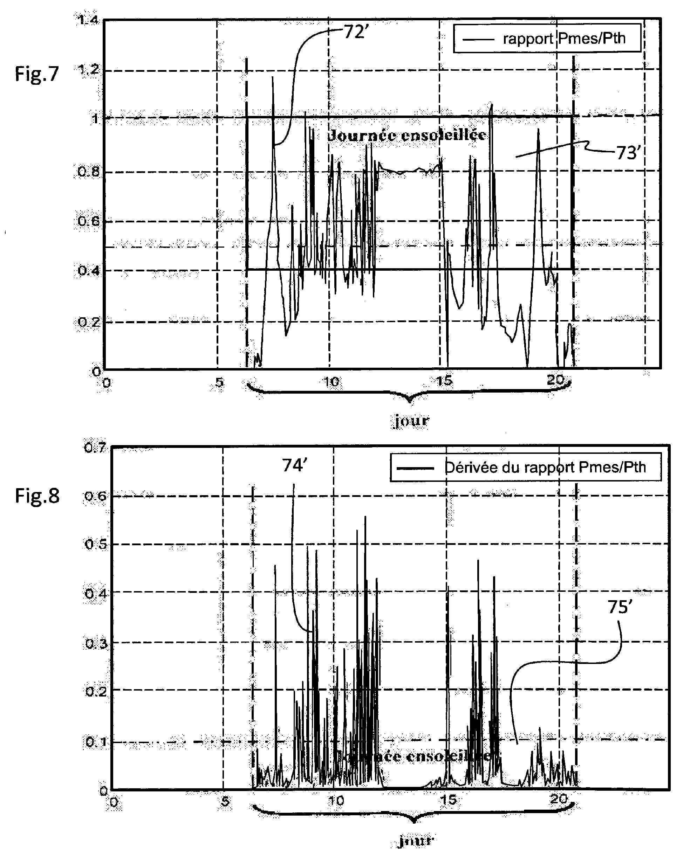

Les figures 6 à 8 illustrent un second exemple de mise en oeuvre de l'étape E1 décrite précédemment. La figure 6 représente deux courbes 70', 71' correspondant respectivement aux puissances électriques mesurée et théorique par temps clair selon un second scénario d'une journée. La figure 7 représente en fonction du temps le rapport 72' entre la puissance électrique mesurée sur la puissance électrique théorique par temps clair pour ce scénario. Sur cette figure, la zone rectangulaire 73' correspond à une situation ensoleillée, pour une valeur du rapport de puissance 72' comprise entre 0,5 et 1. Enfin, la figure 8 illustre la courbe 74' de la valeur absolue de la dérivée du rapport de puissance en fonction du temps. De même, la zone rectangulaire 75' définie par une valeur comprise entre 0 et 0,1 de la valeur absolue de cette dérivée correspond à une situation de journée ensoleillée. Finalement, il ressort que les deux courbes 72', 74' du rapport de puissance mesurée sur la puissance théorique par temps clair et de la valeur absolue de sa dérivée sortent très souvent des zones ensoleillées 73', 75'. La journée considérée par ce scénario est donc considérée comme une journée nuageuse.

Ensuite, le procédé de prévision de la production électrique du dispositif photovoltaïque met en oeuvre une seconde étape E2 qui distingue deux situations en fonction du résultat de la première étape E1.

D'abord, si la journée est ensoleillée et que l'entité de prévisions météorologiques l'avait prévu, il est considéré que la première partie du calcul du procédé mise en oeuvre par les deux premiers blocs 30, 40 est correcte, c'est-à-dire que l'éclairement prévu dans le plan des modules photovoltaïques présente un résultat satisfaisant, dont l'erreur est négligeable. Cet éclairement est donc considéré comme l'éclairement réel, équivalent à celui qui serait obtenu à partir d'une mesure. Ainsi, dans une telle situation, l'erreur constatée entre la production d'électricité réelle mesurée et celle qui était prévue par le procédé dépend uniquement du troisième modèle de calcul mis en oeuvre par le troisième bloc 50 du procédé. Ce calcul consiste à déterminer la production du dispositif photovoltaïque en fonction de l'éclairement, en tenant compte de pertes de puissance en fonction de la température. L'erreur constatée est utilisée pour corriger ce troisième modèle de calcul, en corrigeant le coefficient de pertes utilisé dans ce troisième modèle. Cette correction peut se faire chaque jour ensoleillé, en modifiant immédiatement le coefficient de pertes du modèle afin de le réutiliser immédiatement pour les futures mises en oeuvre du procédé. En variante, le coefficient de pertes recalculé peut être stocké dans une mémoire de l'unité de gestion 10, et servir de base à un recalcul périodique d'un nouveau coefficient de pertes à partir de ces valeurs stockées, comme une simple moyenne de ces valeurs par exemple. La nouvelle valeur du coefficient de pertes remplace alors la précédente pour les futurs calculs de prévision de la production électrique. Ainsi, l'enseignement des journées ensoleillées permet l'apprentissage du troisième modèle utilisé dans le procédé de prévision de la production électrique, les autres modèles de calcul mis en oeuvre dans ce procédé restant inchangés durant ces périodes de journées ensoleillées.

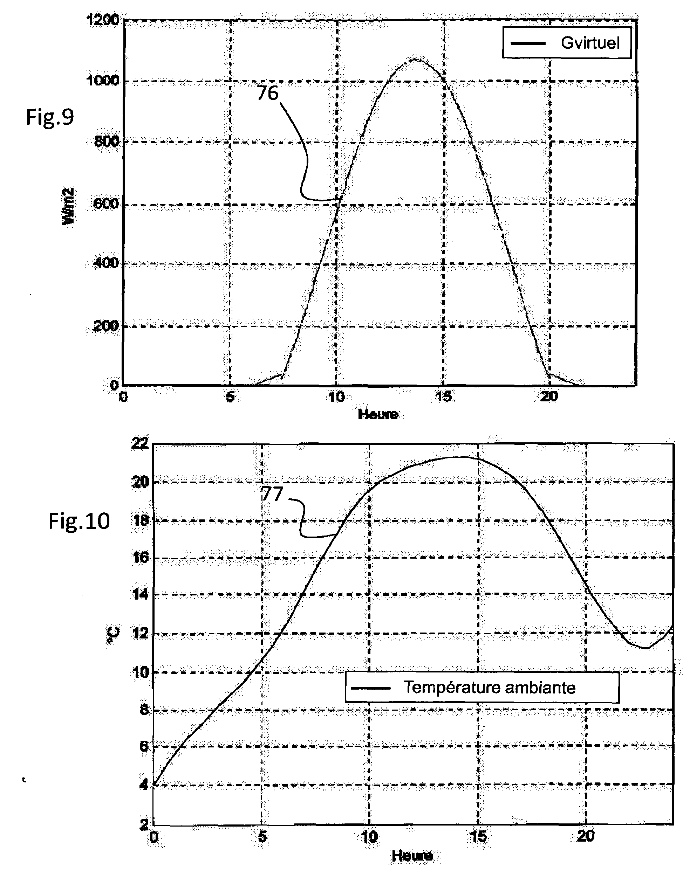

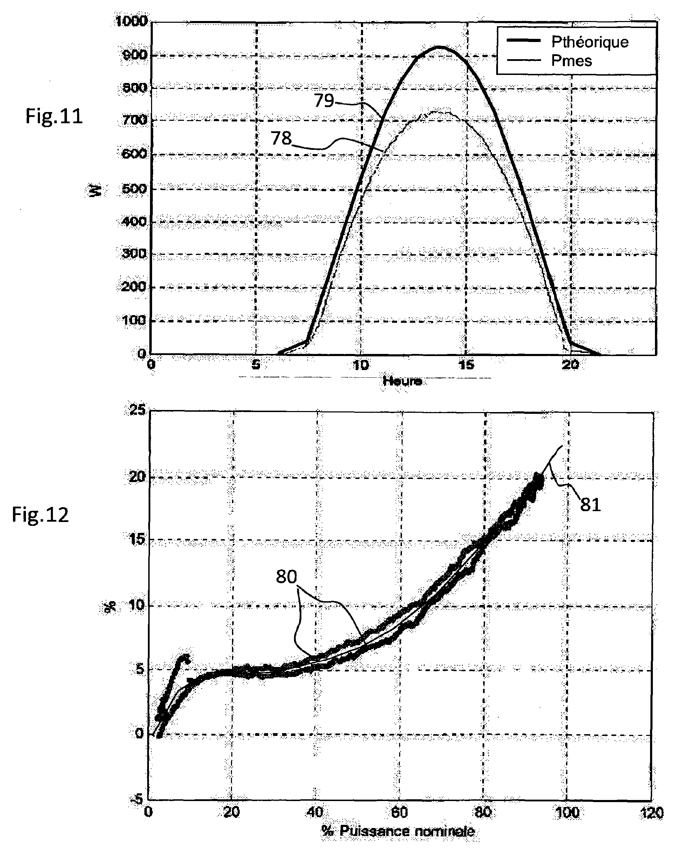

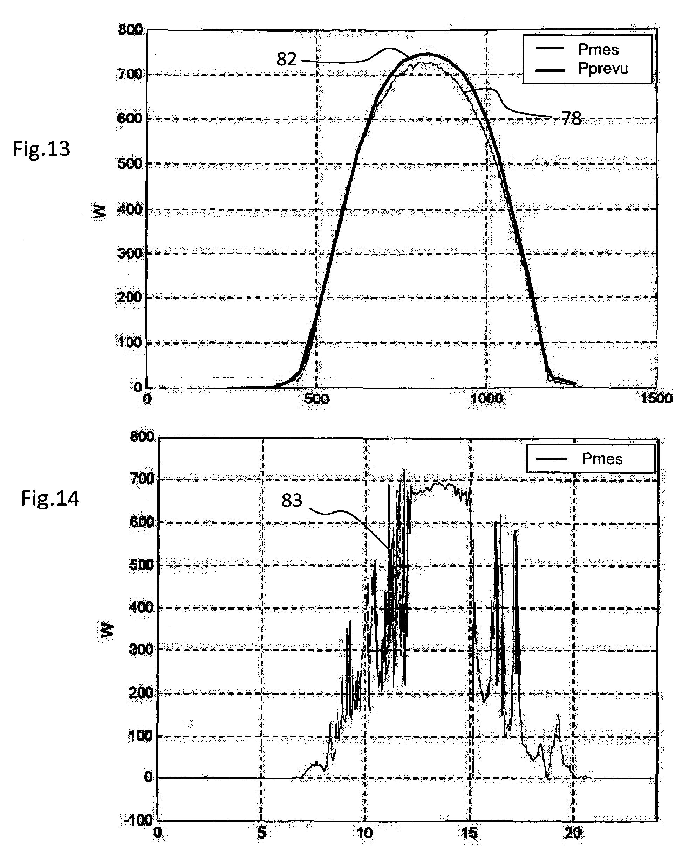

Les figures 9 à 13 illustrent un exemple de mise en oeuvre de cette seconde étape E2 dans le cas d'une journée ensoleillée. Les figures 9 et 10 illustrent respectivement les courbes 76 et 77 d'éclairement et de température obtenues en fonction du temps selon le scénario choisi. La figure 11 illustre les courbes de production mesurée 78 et de production prévue 79 en fonction du temps au cours de cette journée. L'écart entre les deux courbes précédentes permet de déterminer les pertes en fonction du rapport de la puissance prévue sur la puissance nominale, qui sont représentées par les courbes 80 sur la figure 12. Ces pertes sont modélisées par un polynôme représenté par la courbe 81 de cette même figure. Ces pertes ainsi obtenues et modélisées permettent de modifier le coefficient de pertes du troisième modèle de calcul du procédé de provision de l'invention. En utilisant ce nouveau coefficient pour ce scénario, on obtient une nouvelle courbe 82 de production prévue, beaucoup plus proche que la courbe initiale 79 de la courbe de production mesurée 78, comme cela est illustré sur la figure 13.

Si la journée est nuageuse, il est considéré que le troisième modèle de calcul du procédé est correct, c'est-à-dire que la production électrique calculée en fonction de l'éclairement dans le plan des modules photovoltaïques présente un résultat satisfaisant, dont l'erreur est négligeable. Ainsi, dans une telle situation, l'erreur constatée entre la production d'électricité réelle mesurée et celle qui est estimée par le procédé dépend uniquement des deux premiers modèles de calcul mis en oeuvre par le procédé, tels que décrits en référence avec au moins un des deux premiers blocs 30, 40. La production électrique réelle est mesurée puis en appliquant un calcul inverse du calcul mis en oeuvre dans le troisième bloc 50, on en déduit une « mesure virtuelle ou indirecte », soit une valeur réelle indirecte, de l'éclairement qui est reçu par les modules photovoltaïques. La première partie du modèle incluant les deux premiers modèles de calcul mis en oeuvre au sein des blocs 30 et 40 permet d'autre part de calculer un éclairement estimé à partir des prévisions météorologiques. Ces éclairements mesurés et estimés sont comparés et leur différence sert de point de départ à une correction d'au moins un des deux modèles de calcul des deux premiers blocs 30, 40 du procédé. Cette correction peut consister en différentes solutions. D'abord, elle peut ne porter que sur un des deux modèles de calcul mis en oeuvre ou sur les deux. Ensuite, elle peut reposer sur un calcul de corrélations entre la prévision météorologique et l'éclairement local, par une approche statistique ou par réseaux de neurones.

Selon une variante de mise en oeuvre de cette seconde étape E2 dans une situation de journée nuageuse, le second modèle de calcul mis en oeuvre dans le second bloc 40 du procédé est considéré comme fiable. L'étape de correction consiste alors à améliorer uniquement le premier modèle de calcul mis en oeuvre dans le premier bloc 30 du procédé, qui consiste en une extrapolation des données météorologiques afin d'obtenir une estimation de l'éclairement dans un plan horizontal. L'éclairement réel dans un plan horizontal est virtuellement connu, par un calcul inverse du second modèle de calcul à partir de l'éclairement dans le plan des modules photovoltaïques qui est déduit de la mesure de la production électrique réelle, comme cela a été explicité ci-dessus. Il s'agit donc d'un éclairement qu'on peut qualifier de mesure virtuelle, puisqu'il est indirectement mesuré par la mesure de la production électrique réelle. Ensuite, la comparaison entre cet éclairement virtuel mesuré et celui estimé par le procédé sert de base à l'amélioration du premier modèle de calcul du procédé.

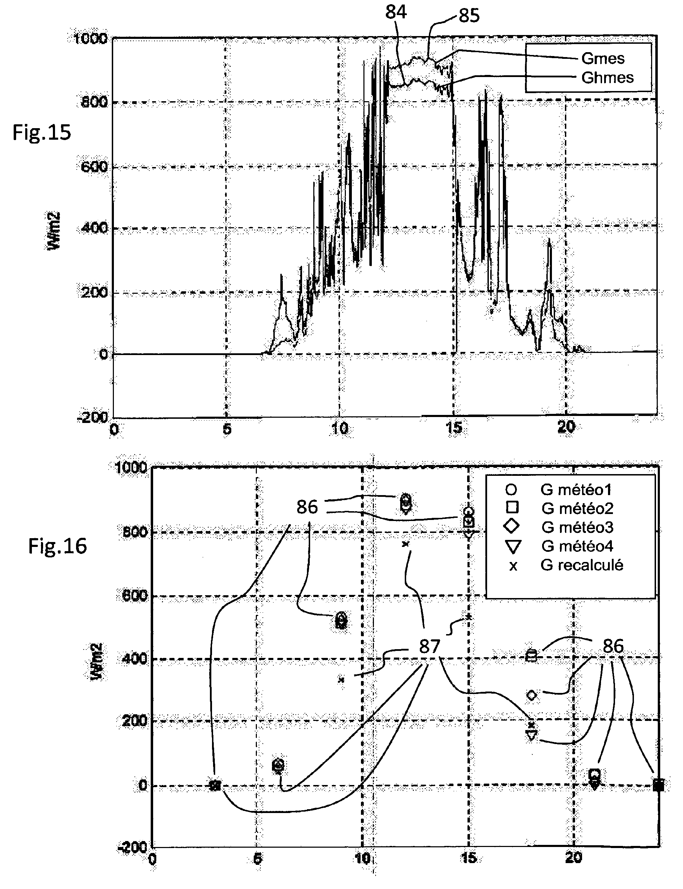

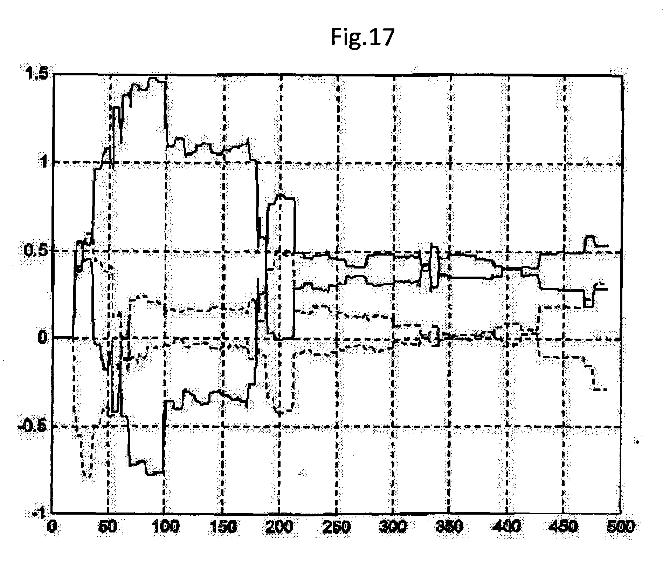

Les figures 14 à 17 illustrent un exemple de mise en oeuvre de cette seconde étape E2 dans le cas d'une journée nuageuse. La figure 14 illustre la courbe 83 de la production électrique mesurée durant la journée nuageuse. La figure 15 montre respectivement les courbes 84 et 85 d'éclairements dans le plan des modules photovoltaïques et dans le plan horizontal en fonction du temps selon le scénario choisi. La figure 16 illustre des points 86 représentant les éclairements en fonction du temps issus des prévisions météorologiques en quatre points autour du dispositif de production photovoltaïque, alors que les points 87 représentent ces mêmes éclairements virtuellement mesurés. Il a été choisi ici de sélectionner les quatre points de données météorologiques qui sont les plus proches du site de production. Il est ensuite possible d'en déduire l'éclairement sur le site par exemple en appliquant une pondération de chacun des quatre points obtenus par les données météorologiques. Les poids correspondants sont déterminés et améliorés en fonction de la base de données de mesures réalisées par temps nuageux. Ils peuvent être calculés par des méthodes purement statistiques, par de l'intelligence artificielle, etc...Cette base de données sert à recalculer les poids pour obtenir un résultat plus précis. Ainsi, la figure 17 illustre l'évolution pendant plusieurs mois des quatre poids considérés en fonction de l'irradiation prévue dans les quatre points considérés.

Le mécanisme d'apprentissage a été décrit sur la base d'un découpage temporel à l'échelle d'une journée. Toutefois, tout autre découpage temporel serait envisageable. Par exemple, il est possible de suivre le même principe sur la base d'une demi-journée, en déterminant d'abord si cette demi-journée est ensoleillée ou nuageuse, puis en poursuivant le reste du procédé. D'autre part, le mécanisme d'apprentissage peut être mis en oeuvre sur toutes ces périodes, ou sur une partie seulement de ces périodes en fonction de critères prédéfinis, comme uniquement les périodes pour lesquelles des mesures de la production électrique du dispositif photovoltaïque sont disponibles avec une fréquence suffisante. De plus, il peut être choisi de ne mettre en oeuvre ce mécanisme d'apprentissage que sur une durée limitée, prédéfinie, ou ce mécanisme peut être mis en oeuvre de manière permanente, illimitée.

L'invention permet de préférence d'améliorer les trois modèles de calcul principaux du procédé, mis en oeuvre au sein des trois blocs 30, 40, 50. Toutefois, son utilisation pour un seul quelconque de ces trois blocs permet déjà une amélioration des procédés existants et n'échappe pas au concept de la présente invention.

D'autre part, l'invention est avantageuse en ce qu'elle permet d'aboutir à un procédé de prévision de la production électrique amélioré à l'aide de la seule mesure de la production électrique réelle. Toutefois, ce concept de l'invention peut être combiné avec tout autre système de correction empirique des modèles de calcul, mis en oeuvre sur la base d'autres mesures par exemple, sans sortir du concept de l'invention.

De plus, l'invention a été décrite en utilisant certaines grandeurs importantes comme l'éclairement, qui représente une puissance reçue par unité de surface. En variante, d'autres grandeurs voisines permettent de mettre en oeuvre les mêmes calculs et le même procédé, comme par exemple l'irradiation, qui représente l'énergie reçue par unité de surface. Il est possible de passer de l'éclairement à l'irradiation par une simple conversion et l'utilisation de l'une ou l'autre de ces grandeurs dans le procédé représente des solutions équivalentes.

Le procédé de l'invention a été présenté selon un découpage abstrait en différents blocs 30, 40, 50, 60 pour faciliter sa compréhension. Toutefois, il représente un tout indissociable dont les différents éléments peuvent être imbriqués de manière plus complexe. En fait, le procédé se découpe en deux grandes parties principales ; la première partie regroupe les deux premiers blocs 30, 40 et permet de formater les prévisions météorologiques au niveau des modules photovoltaïques du dispositif alors que la seconde partie consiste en un calcul de la production électrique prévisionnelle de ces modules photovoltaïques à partir précisément de ces prévisions météorologiques formatées. Le dernier bloc 60 est en fait un élément appartenant à chacun des trois modèles précédents puisqu'il participe au calcul mis en oeuvre par ces modèles en définissant certains des paramètres importants de ces modèles. Par ce biais, quels que soient les modèles de calcul initiaux servant de point de départ du procédé, des modèles théoriques et/ou empiriques, existants ou non dans l'état de la technique, ces modèles, par leur combinaison avec les étapes mises en oeuvre par le bloc 60 de l'invention deviennent des modèles différents, nouveaux et plus performants. La partie essentielle du procédé décrit précédemment est donc celle mise en oeuvre dans le dernier bloc 60. Cette partie du procédé a été présentée pour des raisons de simplification de la description comme une partie distincte du procédé, mais selon une vision plus juste, comme cela a été explicité ci-dessus, ce dernier bloc 60 est une partie intégrante du procédé, est une partie d'au moins un des trois modèles de calcul principaux mis en oeuvre au sein des trois blocs 30, 40, 50, puisque des paramètres essentiels d'au moins un de ces modèles sont déterminés par ce dernier bloc 60.

Cette invention est adaptée à tout dispositif photovoltaïque, qu'il s'agisse d'une grande unité de production ou d'un petit dispositif photovoltaïque associé à un appareil comme un parcmètre.

De plus, l'invention permet finalement de déterminer un procédé de prévision de la production électrique d'une installation photovoltaïque fiable et précis. Il permet ainsi d'autres applications comme la mise en oeuvre d'un diagnostic d'une installation photovoltaïque. En effet, en comparant la production réelle avec celle estimée par le modèle, il est possible d'en déduire une mesure de la performance de l'installation photovoltaïque, voire en cas de forte différence de diagnostiquer sa défaillance.

## Revendications

1. Procédé de prévision de la production électrique d'un dispositif photovoltaïque comprenant des modules photovoltaïques (1), comprenant une première partie d'estimation de l'éclairement qui sera reçu dans le plan des modules photovoltaïques (1) et une seconde partie d'estimation de la production électrique du dispositif photovoltaïque, **caractérisé en ce qu'**il comprend la première étape suivante :
(E1) - détermination si une période passée considérée est ensoleillée ou nuageuse,
et **caractérisé en ce qu'**il comprend la seconde étape suivante (E2) de mise en oeuvre d'au moins une des deux étapes suivantes :
(E2) - correction de la seconde partie du procédé de prévision de la production électrique à partir de la mesure de la production électrique réelle des modules photovoltaïques sur la période considérée si cette période passée considérée est ensoleillée ; et/ou
- correction de la première partie du procédé de prévision de la production électrique à partir de la mesure de la production électrique réelle des modules photovoltaïques sur la période considérée si cette période considérée est nuageuse.

2. Procédé de prévision de la production électrique d'un dispositif photovoltaïque selon la revendication précédente, **caractérisé en ce que** la première étape (E1) de détermination si une période passée considérée est ensoleillée ou nuageuse comprend les sous-étapes suivantes :
(E11) - Mesure selon une fréquence prédéfinie durant la période considérée de la production d'électricité réelle ;
(E14) - Détermination de la production d'électricité théorique avec l'hypothèse de temps clair ;
(E15) - analyse du rapport entre la puissance électrique mesurée et la puissance électrique théorique avec l'hypothèse de temps clair, en détectant d'éventuels événements anormaux, et/ou (E16) analyse de la dérivée de ce rapport, en détectant d'éventuels événements anormaux ;
(E17) - détermination du type de journée en comparant la quantité d'événements anormaux détectés par rapport à un seuil prédéfini, la journée étant considérée comme nuageuse au-delà de ce seuil prédéfini et ensoleillée en-dessous de ce seuil prédéfini.

3. Procédé de prévision de la production électrique d'un dispositif photovoltaïque selon la revendication précédente, **caractérisé en ce que** la détermination de la production d'électricité théorique par temps clair (E14) est effectuée à partir d'une estimation de l'éclairement dans le plan des modules photovoltaïques par temps clair (E12) et à partir de l'établissement d'une série de températures ambiantes (E13).

4. Procédé de prévision de la production électrique d'un dispositif photovoltaïque selon la revendication 2 ou 3, **caractérisé en ce que** l'analyse (E15) du rapport entre la puissance électrique mesurée et la puissance électrique théorique avec l'hypothèse de temps clair consiste à considérer comme un événement normal toute valeur de ce rapport comprise entre 0,5 et 1.

5. Procédé de prévision de la production électrique d'un dispositif photovoltaïque selon l'une des revendications 2 à 4, **caractérisé en ce que** l'analyse (E16) de la dérivée du rapport entre la puissance électrique mesurée et la puissance électrique théorique avec l'hypothèse de temps clair consiste à considérer comme un événement normal tout événement correspondant à une valeur absolue de la dérivée comprise entre 0 et 0,1.

6. Procédé de prévision de la production électrique d'un dispositif photovoltaïque selon l'une des revendications 2 à 5, **caractérisé en ce qu'**il comprend une étape préalable de détection des obstacles naturels comme les montagnes ou les bâtiments, qui créent des ombrages au niveau des modules photovoltaïques.

7. Procédé de prévision de la production électrique d'un dispositif photovoltaïque selon l'une des revendications précédentes, **caractérisé en ce que** la première partie d'estimation de l'éclairement qui sera reçu dans le plan des modules photovoltaïques (1) comprend un premier bloc (30) mettant en oeuvre un premier modèle de calcul pour déterminer l'éclairement horizontal reçu par le dispositif photovoltaïque à partir des prévisions météorologiques et un second bloc (40) mettant en oeuvre un second modèle de calcul pour déterminer l'éclairement reçu dans le plan des dispositifs photovoltaïques (1), **en ce que** la seconde partie d'estimation de la production électrique du dispositif photovoltaïque comprend un troisième bloc (50) mettant en oeuvre un troisième modèle de calcul, et **en ce que** si la période considérée est nuageuse, alors au moins un des deux premiers modèles de calcul mis en oeuvre par le premier (30) et/ou le second bloc (40) est corrigé en fonction de l'écart entre l'éclairement réel, déduit de la production électrique réelle mesurée par un calcul inverse du troisième modèle de calcul du troisième bloc (50), et l'éclairement prévu par le procédé de prévision, le troisième modèle de calcul restant inchangé.

8. Procédé de prévision de la production électrique d'un dispositif photovoltaïque selon la revendication précédente, **caractérisé en ce que** si la période est considérée nuageuse, l'éclairement réel dans un plan horizontal est déduit de l'éclairement dans le plan des modules photovoltaïques qui est déduit de la mesure de la production électrique réelle par un calcul inverse des second et troisième modèles de calcul, et **en ce que** cet éclairement réel dans un plan horizontal est comparé avec celui prévu par le premier modèle de calcul à partir des prévisions météorologiques, ce premier modèle étant corrigé en fonction de la différence entre ces deux valeurs de l'éclairement, les second et troisième modèles de calcul restant inchangés.

9. Procédé de prévision de la production électrique d'un dispositif photovoltaïque selon la revendication précédente, **caractérisé en ce que** le premier modèle de calcul comprend des pondérations de plusieurs prévisions météorologiques prévues en divers points à proximité des modules photovoltaïques, et **en ce que** la correction du premier modèle comprend une phase d'évolution des différents poids du premier modèle.

10. Procédé de prévision de la production électrique d'un dispositif photovoltaïque selon l'une des revendications 1 à 6, **caractérisé en ce que** la première partie d'estimation de l'éclairement qui sera reçu dans le plan des modules photovoltaïques (1) comprend un premier bloc (30) mettant en oeuvre un premier modèle de calcul pour déterminer l'éclairement horizontal reçu par le dispositif photovoltaïque à partir des prévisions météorologiques et un second bloc (40) mettant en oeuvre un second modèle de calcul pour déterminer l'éclairement reçu dans le plan des dispositifs photovoltaïques (1), **en ce que** la seconde partie d'estimation de la production électrique du dispositif photovoltaïque comprend un troisième bloc (50) mettant en oeuvre un troisième modèle de calcul, et **en ce que** si la période est ensoleillée, alors le troisième modèle de calcul est corrigé en fonction de l'écart entre la production électrique réelle mesurée et la production électrique prévue par le procédé de prévision de la production électrique, les premier et second modèles de calcul restant inchangés.

11. Procédé de prévision de la production électrique d'un dispositif photovoltaïque selon l'une des revendications précédentes, **caractérisé en ce que** la correction du procédé de prévision en fonction de la valeur de la production électrique réelle mesurée consiste en un nouveau calcul d'un ou plusieurs paramètre(s) du procédé, ce ou ce(s) paramètre(s) calculé(s) étant immédiatement modifié(s) pour l'application future du procédé ou mémorisé(s) avant un traitement périodique permettant de modifier le ou les paramètre(s) du procédé, cette modification reposant sur des calculs statistiques et/ou à base de réseaux de neurones et/ou d'intelligence artificielle et/ou de modélisation de type polynôme.

12. Procédé de prévision de la production électrique d'un dispositif photovoltaïque selon l'une des revendications précédentes, **caractérisé en ce que** la premiere étape (E1) considère une période d'une journée, et détermine si cette journée est ensoleillée ou nuageuse.

13. Support informatique comprenant un logiciel apte à mettre en oeuvre le procédé de prévision de la production électrique d'un dispositif photovoltaïque selon l'une des revendications précédentes.

14. Dispositif photovoltaïque comprenant des modules photovoltaïques (1), un élément de mesure de leur production électrique réelle, **caractérisé en ce qu'**il comprend une unité de gestion (10) mettant en oeuvre le procédé de prévision de la production électrique selon l'une des revendications 1 à 12.

15. Utilisation du procédé de prévision de la production électrique d'un dispositif photovoltaïque selon l'une des revendications 1 à 12 pour diagnostiquer l'état d'un dispositif photovoltaïque.

## Patentansprüche

1. Prognoseverfahren der Stromproduktion einer Photovoltaik-Anlage, die Photovoltaikmodule (1) aufweist, umfassend einen ersten Teil des Abschätzens der Beleuchtungsstärke, die in der Ebene der Photovoltaikmodule (1) empfangen wird, und einen zweiten Teil des Abschätzens der Stromproduktion der Photovoltaik-Anlage, **dadurch gekennzeichnet, dass** es den folgenden ersten Schritt aufweist:
(E1) - Bestimmen, ob ein vergangener Bezugszeitraum sonnig oder bewölkt ist, und **dadurch gekennzeichnet, dass** es den folgenden zweiten Schritt (E2) zum Umsetzen von mindestens einem der folgenden zwei Schritte aufweist:
(E2) - Korrigieren des zweiten Teils des Prognoseverfahrens der Stromproduktion ausgehend von der Messung der tatsächlichen Stromproduktion der Photovoltaikmodule über den Bezugszeitraum, wenn dieser vergangene Bezugszeitraum sonnig ist; und/oder
- Korrigieren des ersten Teils des Prognoseverfahrens der Stromproduktion ausgehend von der Messung der tatsächlichen Stromproduktion der Photovoltaikmodule über den Bezugszeitraum, wenn dieser Bezugszeitraum bewölkt ist.

2. Prognoseverfahren der Stromproduktion einer Photovoltaik-Anlage nach dem vorhergehenden Anspruch, **dadurch gekennzeichnet, dass** der erste Schritt (E1) des Bestimmens, ob ein vergangener Bezugszeitraum sonnig oder bewölkt ist, die folgenden Unterschritte aufweist:
(E11) - Messen nach einer vorbestimmten Häufigkeit während des Bezugszeitraums der tatsächlichen Stromproduktion;
(E14) - Bestimmen der theoretischen Stromproduktion unter der Annahme von klarem Wetter;
(E15) - Analysieren des Verhältnisses zwischen der gemessenen elektrischen Leistung und der theoretischen elektrischen Leistung unter der Annahme von klarem Wetter, indem etwaige anomale Ereignisse erfasst werden, und/oder (E16) Analysieren der Ableitung dieses Verhältnisses, indem etwaige anomale Ereignisse erfasst werden;
(E17) - Bestimmen der Art des Tages durch Vergleichen der Menge von erfassten anomalen Ereignissen gegenüber einem vorbestimmten Schwellenwert, wobei der Tag über diesem vorbestimmten Schwellenwert als wolkig und unter diesem vorbestimmten Schwellenwert als sonnig angesehen wird.

3. Prognoseverfahren der Stromproduktion einer Photovoltaik-Anlage nach dem vorhergehenden Anspruch, **dadurch gekennzeichnet, dass** das Bestimmen der theoretischen Stromproduktion bei klarem Wetter (E14) ausgehend von einem Abschätzen der Beleuchtungsstärke in der Ebene der Photovoltaikmodule bei klarem Wetter (E12) und ausgehend von dem Erstellen von einer Reihe von Umgebungstemperaturen (E13) durchgeführt wird.

4. Prognoseverfahren der Stromproduktion einer Photovoltaik-Anlage nach Anspruch 2 oder 3, **dadurch gekennzeichnet, dass** das Analysieren (E15) des Verhältnisses zwischen der gemessenen elektrischen Leistung und der theoretischen elektrischen Leistung unter der Annahme von klarem Wetter darin besteht, jeden Wert dieses Verhältnisses, der zwischen 0,5 und 1 liegt, als ein normales Ereignis anzusehen.

5. Prognoseverfahren der Stromproduktion einer Photovoltaik-Anlage nach einem der Ansprüche 2 bis 4, **dadurch gekennzeichnet, dass** das Analysieren (E16) der Ableitung des Verhältnisses zwischen der gemessenen elektrischen Leistung und der theoretischen elektrischen Leistung unter der Annahme von klarem Wetter darin besteht, jedes Ereignis, das einem absoluten Wert der Ableitung entspricht, der zwischen 0 und 0,1 liegt, als ein normales Ereignis anzusehen.

6. Prognoseverfahren der Stromproduktion einer Photovoltaik-Anlage nach einem der Ansprüche 2 bis 5, **dadurch gekennzeichnet, dass** es einen vorausgehenden Schritt des Erfassens von natürlichen Hindernissen, wie den Bergen oder den Gebäuden, die Verschattungen an den Photovoltaikmodulen erzeugen, aufweist.

7. Prognoseverfahren der Stromproduktion einer Photovoltaik-Anlage nach einem der vorhergehenden Ansprüche, **dadurch gekennzeichnet, dass** der erste Teil des Abschätzens der Beleuchtungsstärke, die in der Ebene der Photovoltaikmodule (1) empfangen werden wird, einen ersten Block (30), der ein erstes Berechnungsmodell umsetzt, um die horizontale Beleuchtungsstärke, die von der Photovoltaik-Anlage empfangen wird, ausgehend von den Wettervorhersagen zu bestimmen, und einen zweiten Block (40) aufweist, der ein zweites Berechnungsmodell umsetzt, um die Beleuchtungsstärke, die in der Ebene der Photovoltaikmodule (1) empfangen wird, zu bestimmen, dadurch, dass der zweite Teil des Abschätzens der Stromproduktion der Photovoltaik-Anlage einen dritten Block (50) aufweist, der ein drittes Berechnungsmodell umsetzt, und dass, wenn der Bezugszeitraum bewölkt ist, dann mindestens eines der zwei ersten Berechnungsmodelle, das von dem ersten (30) und/oder dem zweiten Block (40) umgesetzt wird, in Abhängigkeit von der Abweichung zwischen der tatsächlichen Beleuchtungsstärke, die von der gemessenen tatsächlichen Stromproduktion durch eine umgekehrte Berechnung des dritten Berechnungsmodells des dritten Blocks (50) abgeleitet wird, und der Beleuchtungsstärke, die von dem Prognoseverfahren vorgesehen wird, korrigiert wird, wobei das dritte Berechnungsmodell unverändert bleibt.

8. Prognoseverfahren der Stromproduktion einer Photovoltaik-Anlage nach einem der vorhergehenden Ansprüche, **dadurch gekennzeichnet, dass**, wenn der Bezugszeitraum bewölkt ist, die tatsächliche Beleuchtungsstärke in einer horizontalen Ebene von der Beleuchtungsstärke in der Ebene der Photovoltaikmodule abgeleitet wird, die von der Messung der tatsächlichen Stromproduktion durch eine umgekehrte Berechnung des zweiten und dritten Berechnungsmodells abgeleitet wird, und dass diese tatsächliche Beleuchtungsstärke in einer horizontalen Ebene mit jener verglichen wird, die von dem ersten Berechnungsmodell ausgehend von den Wettervorhersagen vorhergesehen wird, wobei dieses erste Modell in Abhängigkeit von der Differenz zwischen diesen zwei Werten der Beleuchtungsstärke korrigiert wird, wobei das zweite und dritte Berechnungsmodell unverändert bleiben.

9. Prognoseverfahren der Stromproduktion einer Photovoltaik-Anlage nach dem vorhergehenden Anspruch, **dadurch gekennzeichnet, dass** das erste Berechnungsmodell Gewichtungen von mehreren Wettervorhersagen aufweist, die an verschiedenen Punkten in der Nähe der Photovoltaikmodule vorgesehen werden, und dass das Korrigieren des ersten Modells eine Entwicklungsphase der verschiedenen Gewichte des ersten Modells aufweist.

10. Prognoseverfahren der Stromproduktion einer Photovoltaik-Anlage nach einem der Ansprüche 1 bis 6, **dadurch gekennzeichnet, dass** der erste Teil des Abschätzens der Beleuchtungsstärke, die in der Ebene der Photovoltaikmodule (1) empfangen werden wird, einen ersten Block (30), der ein erstes Berechnungsmodell umsetzt, um die horizontale Beleuchtungsstärke, die von der Photovoltaik-Anlage empfangen wird, ausgehend von den Wettervorhersagen zu bestimmen, und einen zweiten Block (40) aufweist, der ein zweites Berechnungsmodell umsetzt, um die Beleuchtungsstärke zu bestimmen, die in der Ebene der Photovoltaikmodule (1) empfangen wird, und dass der zweite Teil des Abschätzens der Stromproduktion der Photovoltaik-Anlage einen dritten Block (50) aufweist, der ein drittes Berechnungsmodell umsetzt, und dass, wenn der Zeitraum sonnig ist, dann das dritte Berechnungsmodell in Abhängigkeit von der Abweichung zwischen der gemessenen tatsächlichen Stromproduktion und der Stromproduktion, die von dem Prognoseverfahren der Stromproduktion vorgesehen wird, korrigiert wird, wobei das erste und zweite Berechnungsmodell unverändert bleiben.

11. Prognoseverfahren der Stromproduktion einer Photovoltaik-Anlage nach einem der vorhergehenden Ansprüche, **dadurch gekennzeichnet, dass** das Korrigieren des Prognoseverfahrens in Abhängigkeit von dem Wert der gemessenen tatsächlichen Stromproduktion in einem neuen Berechnen von einem Parameter oder mehreren Parametern des Verfahrens besteht, wobei dieser berechnete oder diese berechneten Parameter für die zukünftige Anwendung des Verfahrens unverzüglich geändert wird (werden) oder vor einem periodischen Verarbeiten gespeichert wird (werden), das ermöglicht, den oder die Parameter des Verfahrens zu ändern, wobei dieses Ändern auf statistischen Berechnungen und/oder auf Berechnungen auf der Basis neuronaler Netze und/oder künstlicher Intelligenz und/oder vom Typ der Polynom-Modellierung beruht.

12. Prognoseverfahren der Stromproduktion einer Photovoltaik-Anlage nach einem der vorhergehenden Ansprüche, **dadurch gekennzeichnet, dass** der erste Schritt (E1) einen Zeitraum eines Tages betrachtet und bestimmt, ob dieser Tag sonnig oder bewölkt ist.

13. Elektronischer Datenträger, der eine Software aufweist, die geeignet ist, das Prognoseverfahren der Stromproduktion einer Photovoltaik-Anlage nach einem der vorhergehenden Ansprüche umzusetzen.

14. Photovoltaik-Anlage, umfassend Photovoltaikmodule (1), ein Element zum Messen ihrer tatsächlichen Stromproduktion, **dadurch gekennzeichnet, dass** sie eine Steuereinheit (10) aufweist, die das Prognoseverfahren der Stromproduktion nach einem der Ansprüche 1 bis 12 umsetzt.

15. Verwendung des Prognoseverfahrens der Stromproduktion einer Photovoltaik-Anlage nach einem der Ansprüche 1 bis 12, um den Zustand einer Photovoltaik-Anlage zu diagnostizieren.

## Claims

1. Method of forecasting the electrical production of a photovoltaic device comprising photovoltaic modules (1), comprising a first part of estimating the lighting that will be received in the plane of the photovoltaic modules (1) and a second part of estimating the electrical production of the photovoltaic device, **characterized in that** it comprises the following first step:
(E1) - determination of whether a past considered period is sunny or cloudy,
and **characterized in that** it comprises the following second step (E2) of implementing at least one of the following two steps:
(E2) - correction of the second part of the method of forecasting the electrical production based on the measurement of the true electrical production of the photovoltaic modules over the past considered period if this past considered period is sunny; and/or
- correction of the first part of the method of forecasting the electrical production based on the measurement of the true electrical production of the photovoltaic modules over the past considered period if this past considered period is cloudy.

2. Method of forecasting the electrical production of a photovoltaic device according to the previous claim, **characterized in that** the first step (E1) for determining whether a past considered period is sunny or cloudy comprises the following substeps:
(E11) - measurement according to a predefined frequency during the considered period of the true electricity production;
(E14) - determination of the theoretical electricity production assuming clear weather;
(E15) - analysis of the ratio between the measured electrical power and the theoretical electrical power assuming clear weather, by detecting any abnormal events and/or (E16) analysis of the derivative in this ratio, by detecting any abnormal events;
(E17) - determination of the type of day by comparing the quantity of abnormal events detected compared to a predefined threshold, the day being considered to be cloudy beyond this predefined threshold and sunny below this predefined threshold.

3. Method of forecasting the electrical production of a photovoltaic device according to the previous claim, **characterised in that** the determination of the theoretical electricity production in clear weather (E14) is performed based on an estimation of the lighting in the plane of the photovoltaic modules in clear weather (E12) and based on the establishment of a series of ambient temperatures (E13).

4. Method of forecasting the electrical production of a photovoltaic device according to claim 2 or 3, **characterized in that** the analysis (E15) of the ratio between the measured electrical power and the theoretical electrical power assuming clear weather consists in considering any value of this ratio between 0.5 and 1 to be a normal event.

5. Method of forecasting the electrical production of a photovoltaic device according to one of claims 2 to 4, **characterized in that** the analysis (E16) of the derivative of the ratio between the measured electrical power and the theoretical electrical power assuming clear weather consists in considering any event corresponding to an absolute value of the differential coefficient (from the derivative) of between 0 and 0.1 to be a normal event.

6. Method of forecasting the electrical production of a photovoltaic device according to one of claims 2 to 5, **characterized in that** it comprises a preliminary step for detection of natural obstacles such as mountains or buildings, that create shadows at the level of the photovoltaic modules.

7. Method of forecasting the electrical production of a photovoltaic device according to one of previous claims, **characterized in that** the first part of estimating the lighting that will be received in the plane of the photovoltaic modules (1) comprises a first block (30) implementing a first calculation model to determine the horizontal lighting received by the photovoltaic device based on meteorological forecasts and a second block (40) implementing a second calculation model to determine the lighting received in the plane of the photovoltaic devices (1), **in that** the second part of estimating the electrical production of the photovoltaic device comprises a third block (50) implementing a third calculation model, and **in that**, if the past considered period is cloudy, then at least one of the first two calculation models implemented by the first (30) and/or the second (40) block is corrected according to the deviation between the true lighting, deduced from the true electrical production measured by an inverse calculation of the third calculation model of the third block (50), and the lighting forecast by the forecasting method, the third calculation model remaining unchanged.

8. Method of forecasting the electrical production of a photovoltaic device according to the previous claim, **characterized in that**, if the past considered period is cloudy, the true lighting in a horizontal plane is deduced from the lighting in the plane of the photovoltaic modules which is deduced from the measurement of the true electrical production by an inverse calculation of the second and third calculation models, and **in that** this true lighting in the horizontal plane is compared with that forecast by the first calculation model based on meteorological forecasts, this first model being corrected according to the difference between these two lighting values, the second and third calculation models remaining unchanged.

9. Method of forecasting the electrical production of a photovoltaic device according to the previous claim, **characterized in that** the first calculation model comprises weightings of several meteorological forecasts forecast at various points close to the photovoltaic modules, and **in that** the correction of the first model comprises a phase of evolution of the different weights of the first model.

10. Method of forecasting the electrical production of a photovoltaic device according to one of claims 1 to 6, **characterized in that** the first part of estimating the lighting that will be received in the plane of the photovoltaic modules (1) comprises a first block (30) implementing a first calculation model to determine the horizontal lighting received by the photovoltaic device based on meteorological forecasts and a second block (40) implementing a second calculation model to determine the lighting received in the plane of the photovoltaic devices (1), **in that** the second part of estimating the electrical production of a photovoltaic device comprises a third block (50) implementing a third calculation model, and **in that**, if the period is sunny, then the third calculation model is corrected according to the deviation between the measured true electrical production and the electrical production forecast by the method of forecasting the electrical production, the first and second calculation models remaining unchanged.

11. Method of forecasting the electrical production of a photovoltaic device according to one of previous claims, **characterized in that** the correction of the forecasting method according to the value of the measured true electrical production consists in a new calculation of one or more parameter(s) of the method, this or these calculated parameters being immediately modified for the future application of the method or stored before a periodic processing operation making it possible to modify the parameter(s) of the method, this modification relying on statistical calculations and/or based on neural networks and/or artificial intelligence and/or polynomial-type modelling.

12. Method of forecasting the electrical production of a photovoltaic device according to one of previous claims, **characterized in that** the first step (E1) considers a period of a day, and determines whether this day is sunny or cloudy.

13. Computer medium comprising a software able to implement the method of forecasting the electrical production of a photovoltaic device according to one of previous claims.

14. Photovoltaic device comprising photovoltaic modules (1), and an element for measuring their true electrical production, **characterized in that** it comprises a management unit (10) implementing the method of forecasting the electrical production according to one of claims 1 to 12.

15. Use of the method of forecasting the electrical production of a photovoltaic device according to one of claims 1 to 12 to diagnose the state of a photovoltaic device.
